(19)

Europäisches
Patentamt
European
Patent Office
Office européen
des brevets

(11) **EP 3 051 792 A1**

(12) **EUROPEAN PATENT APPLICATION**

(43) Date of publication:
**03.08.2016 Bulletin 2016/31**

(51) Int Cl.:
***H04N 1/60*** *(2006.01)*

(21) Application number: **15305143.8**

(22) Date of filing: **30.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Lasserre, Sebastien**
**35235 Thorigné Fouillard (FR)**

• **Leleannec, Fabrice**
**35250 Mouazé (FR)**
• **Touze, David**
**35200 RENNES (FR)**

(74) Representative: **Huchet, Anne et al**
**Technicolor**
**1, rue Jeanne d'Arc**
**92443 Issy-les-Moulineaux (FR)**

(54) **Method and device for matching colors between color pictures of different dynamic range**

(57)    The present disclosure generally relates to a method of matching colors between color pictures of different dynamic range. An input color gamut of an input color picture (301) and an output color gamut of an output color picture (302) is obtained. The output color gamut is modified to match the input color gamut (303), wherein a perceived color error distance between the input color gamut and the output color gamut is minimized.

300

301

302

303

**Fig. 3**

EP 3 051 792 A1

**Description**

Method and device for matching colors between color pictures of different dynamic range.

**2. Field.**

The present disclosure generally relates to picture/video encoding and decoding. Particularly, but not exclusively, the technical field of the present disclosure is related to matching colors between color pictures of different dynamic range.

**3. Background.**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

In the following, a color picture contains several arrays of samples (pixel values) in a specific picture/video format which specifies all information relative to the pixel values of a picture (or a video) and all information which may be used by a display and/or any other device to visualize and/or decode a picture (or video) for example. A color picture comprises at least one component, in the shape of a first array of samples, usually a luma (or luminance) component, and at least one another component, in the shape of at least one other array of samples. Or, equivalently, the same information may also be represented by a set of arrays of color samples (color components), such as the traditional tri-chromatic RGB representation.

A pixel value is represented by a vector of n values, where n is the number of components. Each value of a vector is represented with a number of bits which defines a maximal dynamic range of the pixel values.

Standard-Dynamic-Range pictures (SDR pictures) are color pictures whose luminance values are represented with a limited dynamic usually measured in power of two or f-stops. SDR pictures have a dynamic around 10 fstops, i.e. a ratio 1000 between the brightest pixels and the darkest pixels in the linear domain, and are coded with a limited number of bits (most often 8 or 10 in HDTV (High Definition Television systems) and UHDTV (Ultra-High Definition Television systems) in a non-linear domain, for instance by using the ITU-R BT.709 OEFT (Optico-Electrical-Transfer-Function) (Rec. ITU-R BT.709-5, April 2002) or ITU-R BT.2020 OETF (Rec. ITU-R BT.2020-1, June 2014) to reduce the dynamic. This limited non-linear representation does not allow correct rendering of small signal variations, in particular in dark and bright luminance ranges. In High-Dynamic-Range pictures (HDR pictures), the signal dynamic is much higher (up to 20 f-stops, a ratio one million between the brightest pixels and the darkest pixels) and a new non-linear representation is needed in order to maintain a high accuracy of the signal over its entire range. In HDR pictures, raw data are usually represented in floating-point format (either 32-bit or 16-bit for each component, namely float or half-float), the most popular format being openEXR half-float format (16-bit per RGB component, i.e. 48 bits per pixel) or in integers with a long representation, typically at least 16 bits.

A color gamut is a certain complete set of colors. The most common usage refers to a set of colors which can be accurately represented in a given circumstance, such as within a given color space or by a certain output device.

A color gamut is sometimes defined by RGB primaries defined in the CIE1931 color space chromaticity diagram and a white point.

It is common to define primaries in the so-called CIE1931 color space chromaticity diagram. This is a two dimensional diagram (x,y) defining the colors independently on the luminance component. Any color XYZ is then projected in this diagram thanks to the transform:

$$\begin{cases} x = \dfrac{X}{X + Y + Z} \\ y = \dfrac{Y}{X + Y + Z} \end{cases}$$

The z=1-x-y component is also defined but carry no extra information.

A gamut is defined in this diagram by triangle whose vertices defined by a set of (x,y) coordinates of three primaries RGB. The white point W is then defined as the center of the triangle.

A color volume is defined by a color space and a dynamic range of the values represented in said color space.

For example, a color gamut is defined by a RGB ITU-R Recommendation BT.2020 color space for UHDTV. An older standard, ITU-R Recommendation BT.709, defines a smaller color gamut for HDTV. In SDR, the dynamic range is defined officially up to 100 nits (candela per square meter) for the color volume in which data are coded, although some display technologies may show brighter pixels.

High Dynamic Range pictures (HDR pictures) are color pictures whose luminance values are represented with a HDR dynamic that is higher than the dynamic of a SDR picture.

The HDR dynamic is not yet defined by a standard but one may expect a dynamic range up to a few thousands nits. For instance, a HDR color volume is defined by a RGB BT.2020 color space and the values represented in said RGB color space belong to a dynamic range from 0 to 4000 nits. Another example of HDR color volume is defined by a RGB BT.2020 color space and the values represented in said RGB color space belong to a dynamic range from 0 to 1000 nits.

Color-grading a picture (or a video) is a process of altering/enhancing the colors of the picture (or the video). Usually, color-grading a picture involves a change of the color volume (color space and/or dynamic range) or a change of the color gamut relative to this picture. Thus, two different color-graded versions of a same picture are versions of this picture whose values are represented in different color volumes (or color gamut) or versions of the picture whose at least one of their colors has been altered/enhanced according to different color grades. This may involve user interactions.

For example, in cinematographic production, a picture and a video are captured using tri-chromatic cameras into RGB color values composed of 3 components (Red, Green and Blue). The RGB color values depend on the tri-chromatic characteristics (color primaries) of the sensor. A first color-graded version of the captured picture is then obtained in order to get theatrical renders (using a specific theatrical grade). Typically, the values of the first color-graded version of the captured picture are represented according to a standardized YUV format such as BT.2020 which defines parameter values for UHDTV.

Then, a Colorist, usually in conjunction with a Director of Photography, performs a control on the color values of the first color-graded version of the captured picture by fine-tuning/tweaking some color values in order to instill an artistic intent.

The problem to be solved is the distribution of a compressed HDR picture (or video) while, at the same time, distributing an associated SDR picture (or video) representative of a color-graded version of said HDR picture (or video).

A trivial solution is simulcasting both SDR and HDR picture (or video) on a distribution infrastructure but the drawback is to virtually double the needed bandwidth compared to a legacy infrastructure distributing adapted to broadcast SDR picture (or video) such as HEVC main 10 profile *("*High Efficiency Video Coding", SERIES H: AUDIOVISUAL AND MULTIMEDIA SYSTEMS, Recommendation ITU-T H.265, Telecommunication Standardization Sector of ITU, April 2013*)*.

Using a legacy distribution infrastructure is a requirement to accelerate the emergence of the distribution of HDR pictures (or video). Also, the bitrate shall be minimized while ensuring good quality of both SDR and HDR version of the picture (or video).

Moreover, backward compatibility may be ensured, i.e. the SDR picture (or video) shall be viewable for users equipped with legacy decoder and display, i.e. in particular, overall perceived brightness (i.e. dark vs. bright scenes) and perceived colors (for instance, preservation of hues, etc.) should be preserved.

Another straightforward solution is to reduce the dynamic range of the HDR picture (or video) by a suitable non-linear function, typically into a limited number of bits (say 10 bits), and directly compressed by the HEVC main10 profile. Such non-linear function (curve) already exist like the so-called PQ EOTF proposed by Dolby at SMPTE *(*SMPTE standard: High Dynamic Range Electro-Optical Transfer Function of Mastering Reference Displays, SMPTE ST 2084:2014*)*.

The drawback of this solution is the lack of backward compatibility, i.e. the obtained reduced version of the picture (video) has not a sufficient visual quality to be considered as being viewable as a SDR picture (or video), and compression performance are somewhat poor.

The present disclosure has been devised with the foregoing in mind.

**4. Summary.**

The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy at least one of the abovementioned drawbacks with a method of matching colors between color pictures of different dynamic range, characterized in that it comprises

- obtaining an input color gamut of an input color picture;
- obtaining an output color gamut of an output color picture; and
- modifying the output color gamut to match the input color gamut, wherein said modifying comprises minimizing a perceived color error distance between the input color gamut and the output color gamut.

According to an embodiment, the perceived color error depends on a hue and a perceived saturation of said color gamuts.

According to an embodiment, the output color picture is a dynamic reduced version of the input color picture.

According to an embodiment, the modifying comprises applying a multiplicative factor to chrominance components of the input color picture, the multiplicative factor depending on the minimized perceived color error.

In an example embodiment, the multiplicative factor depends on a luminance component of the output color picture.

According to an embodiment, the multiplicative factor depends on a modulation value (also called backlight value) of the input color picture.

According to an embodiment, the input color gamut is defined as a finite set of points in an xy plane of a XYZ colorspace, such as the CIE 1931 color space.

In an example embodiment, perceptual weights are associated to said points such that the perceived color error distance is weighted by the perceptual weight at each point.

According to an embodiment, values of said multiplicative factor are provided in a look up table with respect to values of the luminance component of the output color picture.

In an example embodiment, for different backlight values of the input color picture dedicated look up tables or a combined look up table are provided.

In an example embodiment, a desired multiplicative factor associated with a dedicated backlight value is either read from the look up table or determined by interpolation between corresponding multiplicative factors associated with neighboring backlight values.

According to an embodiment, the perceived color error distance is based on the ab distance in the Lab colorspace.

According to other of its aspects, the disclosure relates to devices comprising a processor configured to implement the above methods, a computer program product comprising program code instructions to execute the steps of the above methods when this program is executed on a computer, a processor readable medium having stored therein instructions for causing a processor to perform at least the steps of the above methods, and a non-transitory storage medium carrying instructions of program code for executing steps of the above methods when said program is executed on a computing device.

The specific nature of the disclosure as well as other objects, advantages, features and uses of the disclosure will become evident from the following description of embodiments taken in conjunction with the accompanying drawings.

**5. Brief Description of Drawings.**

In the drawings, an embodiment of the present disclosure is illustrated. It shows:

- Fig. 1 shows schematically a diagram of the steps of a method of encoding a color picture;
- Fig. 2 shows schematically a diagram of the steps of a method of decoding a color picture from at least one bitstream;
- Fig. 3 shows schematically a diagram of the steps of a method for matching colors between color pictures of different dynamic range in accordance with an embodiment of the disclosure;
- Fig. 4 shows schematically a diagram of the steps of a method for matching colors between color pictures of different dynamic range in accordance with another embodiment of the disclosure;
- Fig. 5 illustrates a discretized gamut with uniform meshs;
- Fig. 6 illustrates a set of discretized gamuts for various values of $Y_0$;
- Fig. 7 illustrates a discretized gamut with weighted meshs;
- Fig. 8 schematically shows a plot of a cost function cost($\beta$");
- Fig. 9 schematically shows plots of cost functions cost($\beta"_{codec}^{(Ba,L)}$) for various Balues of Ba; and
- Fig. 10 shows an example of an architecture of a device in accordance with an embodiment of the disclosure.

**6. Description of Embodiments.**

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

A color picture is considered as having three color components in which the pixel values of the color picture are represented. The present disclosure, although explained by way of concrete example, is not limited to any color space in which the three components are represented but extends to any color space such as RGB, CIELUV, XYZ, CIELab, etc.

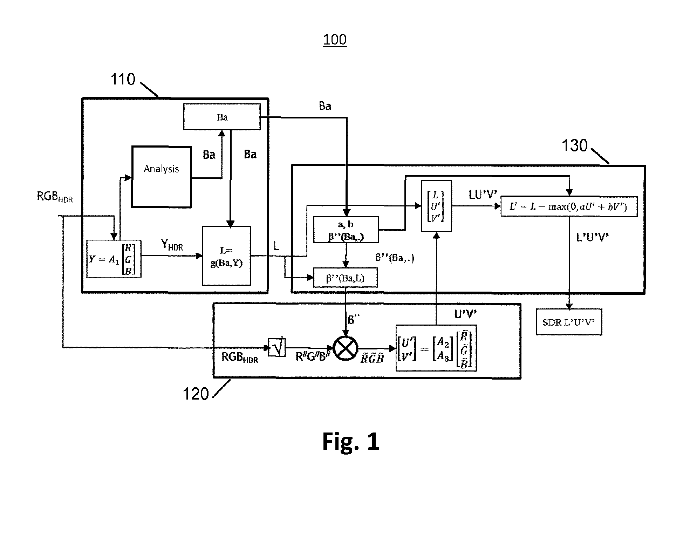

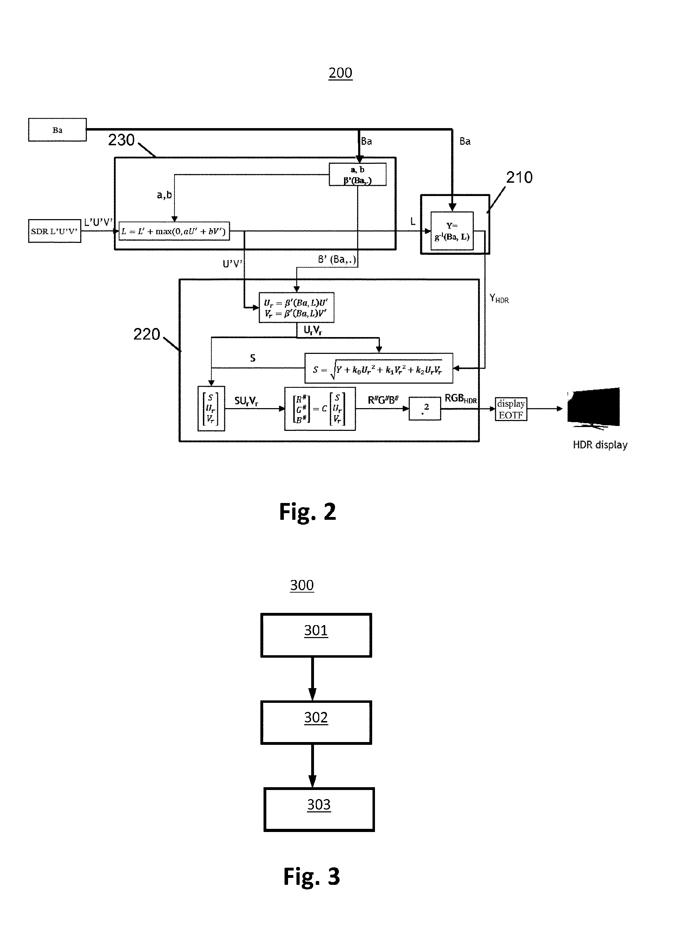

Referring to Fig. 1 and Fig. 2, an example of a generic encoding scheme (encoder and decoder) is illustrated that depends mainly on a set of two-variable functions $\beta''(Ba,L)$, $\beta'(Ba,L)$ and $g(Ba,L)$ and of two constant parameters a and b that are used for the mapping from HDR to SDR of the luminance and the chrominance such that colors, as well as texture, are preserved in the SDR image/video compared to the original HDR image/video. While $g(Ba,L)$ is preferably a Slog function in the variable L, the triplet $(a, b, \beta'')$ should be optimized to lead to the best possible SDR/HDR color matching (hue and perceived saturation) depending on the peak luminance, the input/output gamut's, and the backlight value Ba.

The encoding involves the function $\beta''(Ba,L)$, and the decoding involves the function $\beta'(Ba,L)$.

Referring to Fig. 1, a diagram illustrating steps of an example of a method of encoding 100 a color picture is schematically shown. The encoder side processing steps are summarized as follows. In a first step 110, a luminance dynamic reduction is performed to get L. In the shown example, a reduction of a HDR luminance $Y_{HDR}$ dynamic is performed to get a luma $L_{SDR}$, for example on 10 bits, wherein $L_{SDR} = f(Y_{HDR})$ with f being a non-linear function used to compress the dynamic.

In a second step 120, a construction of two chroma components is performed, U'V' in the shown example. This completes $L_{SDR}$ such that a SDR picture or video with three components is obtained, $L_{SDR}$ UV in the shown example wherein $R^\#B^\#G^\#$ are determined as the square root of $RGB_{HDR}$ and $\tilde{R}\tilde{G}\tilde{B}$ are the normalization of $R^\#B^\#G^\#$ by a common multiplicative factor $\beta''$. Here, $\beta''(L_{SDR})$ is a given function depending at least on $L_{SDR}$. In the shown example, the two chroma components U' V' are determined as $[U'; V'] = Mat_{2x3} [\tilde{R}; \tilde{G}; B]$ where the matrix is a 2x3 matrix.

In a third step 130, a correction of the color components by a gamut mapping is performed, here from LU'V' to L'U"V". In the shown example, a gamut mapping from the SDR space LUV$_{SDR}$ with incorrect hues and saturations to the corrected space L'U'V'$_{SDR}$ is carried out that preserves HDR colors better. In the shown example [L'; U"; V"] = Mat$_{3x3}$(L) [L; U'; V'].

Referring to Fig. 2, a diagram illustrating steps of an example of a corresponding method of decoding 200 a color picture is schematically shown. The decoder side processing steps are summarized as follows.

In a first step 230, which may be considered an inverse of corresponding third step 130 shown in Fig. 1, a correction of the color components back to LU'V' from L'U"V" by a gamut de-mapping is performed. In the shown example, [L; U"; V'] = Mat$_{3x3}$ [L'; U"; V"] is determined.

In a second step 210, which may be considered an inverse of corresponding first step 110 shown in Fig. 1, a luminance dynamic expansion is performed to get Y back, i.e. for the shown example $Y_{HDR} = f^{-1}(L_{SDR})$.

In a third step 220, which may be considered an inverse of corresponding second step 120 shown in Fig. 1, RGB$_{HDR}$ are recovered from YU'V'. This includes a re-normalization of U'V' into $U_rV_r$ by a common multiplicative factor

$\beta'$ and the determination of a value S by $S = \sqrt{Y + k_0 U_r^2 + k_1 V_r^2 + k_2 U_r V_r}$. In the shown example, R#, G#

and B# are determined as [R#;G#;B# ] = Mat$_{3x3}$ [S;U$_r$;V$_r$] and RGB$_{HDR}$ is obtained as the square of R#G#B#.

By construction, in order to get a decoder that is the exact inverse of the encoder, one must take $\beta'$ = 1/$\beta''$. As a consequence, for a given couple (a,b), the determination of $\beta''$ is sufficient to define both the encoder end the decoder.

The problem to solve is to find $\beta''$ such that SDR L'U"V" colors correspond at best to the input HDR colors (hue and perceived saturation) and the process is decodable, i.e. the scaling by $\beta''$ avoids clipping in U"V" as best as possible.

Referring to Fig. 3, a method for matching colors between color pictures of different dynamic range in accordance with an embodiment of the disclosure is schematically shown. The method comprises obtaining an input color gamut of an input color picture 301, obtaining an output color gamut of an output color picture 302, and modifying 303 the output color gamut to match the input color gamut, wherein the modifying comprises minimizing a perceived color error distance between the input color gamut and the output color gamut.

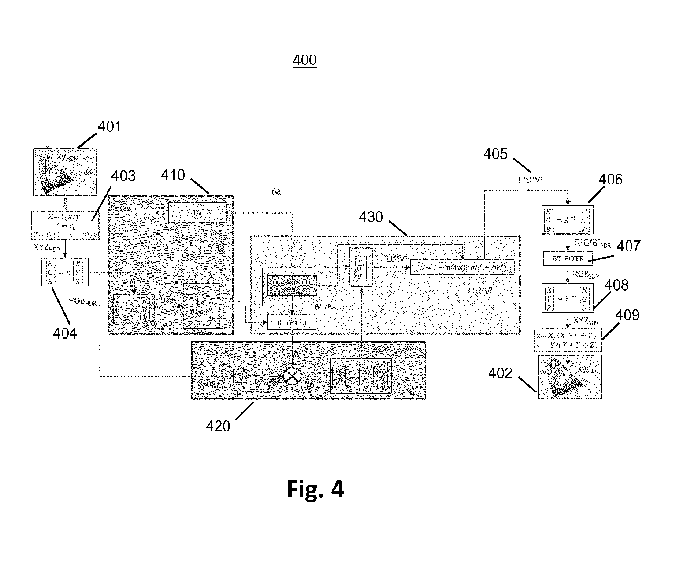

The minimization will be explained, by way of example, with reference to the embodiment shown in Fig. 4, where the output color picture is an SDR version of an HDR input color picture at an input of a encoder mainly corresponding to an encoding described with reference to Fig. 1. Therefore, a detailed description of the corresponding encoding steps 410, 420, 430 is omitted and the description focusses on the optimization problem.

An optimization of $\beta''$ is performed such that the distance between an input HDR gamut 401 and the output associated SDR gamut 402 is minimized in terms of perceived color distortion or error. To do so, one must define precisely the notion of gamut, the image of a gamut by the codec, and the distance between two gamuts.

For solving the the minimization problem, the following parameters are fixed: the backlight Ba, the matrix of the [L'; U"; V"] = Mat$_{3x3}$(L) [L; U'; V'], i.e. the two parameters (a,b), and a luminance level $Y_0$.

An optimized $\beta''$, i.e. $\beta''(Ba,L_0,a,b)$, value is then deduced that minimizes the distance between an input HDR gamut at luminance $Y_0$ and an output SDR gamut at luma $L_0=f(Y_0)$.

The input HDR gamut is the given of (x,y) points in the 2D gamut triangle (BT709 or BT2020 triangle for instance) and a luminance $Y_0$. In variants, may take another space to describe the gamut, for instance the subspace ab of the Lab space, etc. One deduces absolute linear XYZ$_{HDR}$ coordinates 403 from the conversion formulas

$$X = Y_0 x/y, \quad Y = Y_0 \quad \text{and} \quad Z = Y_0(1 - x - y)/y.$$

Then, thanks to the BT709 or BT2020 3x3 matrix E 404 from XYZ to RGB, one gets the linear RGB$_{HDR}$ components 405 that are sued as the input of the LUV encoder 410, 420, 430, as shown in Fig. 4.

$$\begin{bmatrix} R \\ G \\ B \end{bmatrix} = E \begin{bmatrix} X \\ Y \\ Z \end{bmatrix}$$

On the output side, the encoding 410, 420, 430, here the LUV codec explained with reference to Fig. 1, provides L'U'V' 405 seen as the standard YUV on a SDR display. This is changed back to gammatized R'G'B'$_{SDR}$ space 406 by applying the inverse matrix $A^{-1}$ of the standard BT709/2020 RGB->YUV matrix defined by the ITU-R; and then back to the linear RGB$_{SDR}$ space by applying 407 the gammatized-to-linear BT709/2020 EOTF. The coordinates in the gamut are determined by going to the XYZ$_{SDR}$ space using the inverse 408 of the matrix E used on the input side, and finally (x,y)$_{SDR}$ is found 409 out by x=X/(X+Y+Z) and y=Y/(X+Y+Z).

Thus, the shown LUV generic codec defines a mapping

$$\theta_{Ba,Y_0,a,b}(\beta'',*): (x,y)_{\text{HDR}} \longmapsto (x,y)_{\text{SDR}}$$

For fixed a,b, the minimization of the distance between the input and output couples (x,y) on the gamut determines a value of $\beta''$ depending on $(Ba,Y_0)$ or equivalently $(Ba,L_0)$ as follows

$$\beta''(Ba,L_0) = \text{argmin}_{\beta''} \iint_{\text{gamut}} d_{xy}\left(\theta_{Ba,Y_0,a,b}(\beta'',(x,y)),(x,y)\right)\text{d}(x,y)$$

where d is a chrominance distance defined on the gamut.

In the following, the construction of the domain of the integral and the distance $d_{xy}$ is shown. The gamut is defined by the (x,y) coordinates of the three primaries. For instance, the triangle of the BT709 gamut is the triangle with the three following vertices:

$x_R = 0.64$, $y_R = 0.33$, $x_G = 0.30$, $y_G = 0.60$ *and* $x_B = 0.15$, $y_B = 0.06$.

The color points inside the gamut G are defined as the positive weighted combination of the primaries, i.e. the convex hull of the three primaries.

$$(x,y) \in G \iff \exists \lambda,\mu,\nu \geq 0 \text{ s.t. } \lambda + \mu + \nu = 1 \text{ and } (x,y)$$
$$= \lambda(x_R,y_R) + \mu(x_G,y_G) + \nu(x_B,y_B)$$

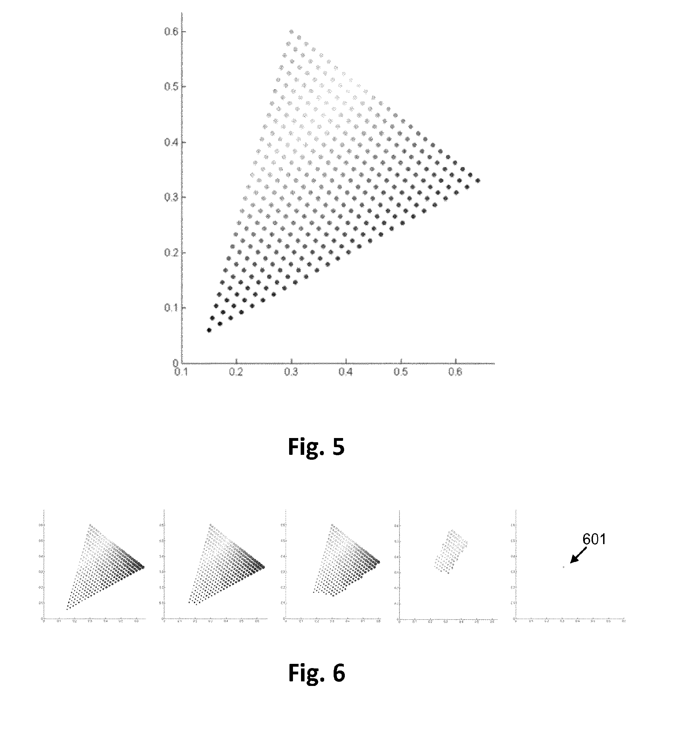

The meshing of the gamut is performed by the meshing of the parameters $(\lambda, \mu)$ in the domain $[0,1]^2$ and a mesh is valid if and only if $\nu=1-\lambda-\mu$ is positive. A uniform meshing on these two parameters leads to a gamut discretization as shown in Fig.5.

The gamut closure is determined by discarding xy meshes for which, given $Y_0$, a component of its linear RGB representation exceeds the peak luminance P. The remaining gamut is shown in Fig. 6 for various values of $Y_0$. Only the white point 601 remains near the peak $Y_0=P$.

However, this uniform meshing in the xy space does not reflect the sensitivity of human beings to colors. Ideally, one would expect more meshes in sensible zones and less meshes where the color difference is much less perceived. In theory, one should map a uniform meshing from an Euclidian perceptual color space onto the xy space. This is achieved by using the Lab color space and replacing the mapped non-uniform meshing by weights on each mesh in the xy space.

Let us consider the function $\omega: (x, y) \to (L, a, b)$ that sends a gamut point (x,y) to a Lab space point (L,a,b) assuming that the luminance $Y_0$ is unity.

$$X = x/y, \quad Y = 1 \quad \text{and} \quad Z = (1 - x - y)/y$$
$$L = 116f(Y/Y_f), \qquad a = 500(f(X/Y_f) - f(Y/Y_f)) \qquad \text{and} \qquad b =$$
$$200(f(Y/Y_f) - f(Z/Y_f))$$

where $Y_f$ is an environmental luminance reference and $f$ is the following non-linear transform

$$f(t) = \begin{cases} t^{1/3} & \text{if } t > \left(\frac{6}{29}\right)^3 \\ \frac{1}{3}\left(\frac{29}{6}\right)^2 t + \frac{4}{29} & \text{otherwise} \end{cases}$$

Clearly, Y and L being fixed, the luma component L plays no role and $\omega$ sends a 2D xy volume on a 2D ab volume. The change in volume is provided by the absolute value $J(x, y) := |\text{Jac}(\omega)|$ of the determinant of the Jacobian matrix $\text{Jac}(\omega)$ of $\omega$ defined by

$$\mathsf{Jac}(\omega) = \begin{bmatrix} \partial_x a & \partial_y a \\ \partial_x b & \partial_y b \end{bmatrix}.$$

The volume occupied by a xy mesh is proportional to $J(x, y)$ in the uniform ab color space. So, the error of color coding at a point (x,y) is multiplied by $J(x, y)$ in the Lab space. That is why the weighted distance is defined as

$$d_{xy} := J(x, y) d_{ab}$$

on the space xy to measure the color difference and where $d_{ab}$ is a distance on the uniform color space ab .

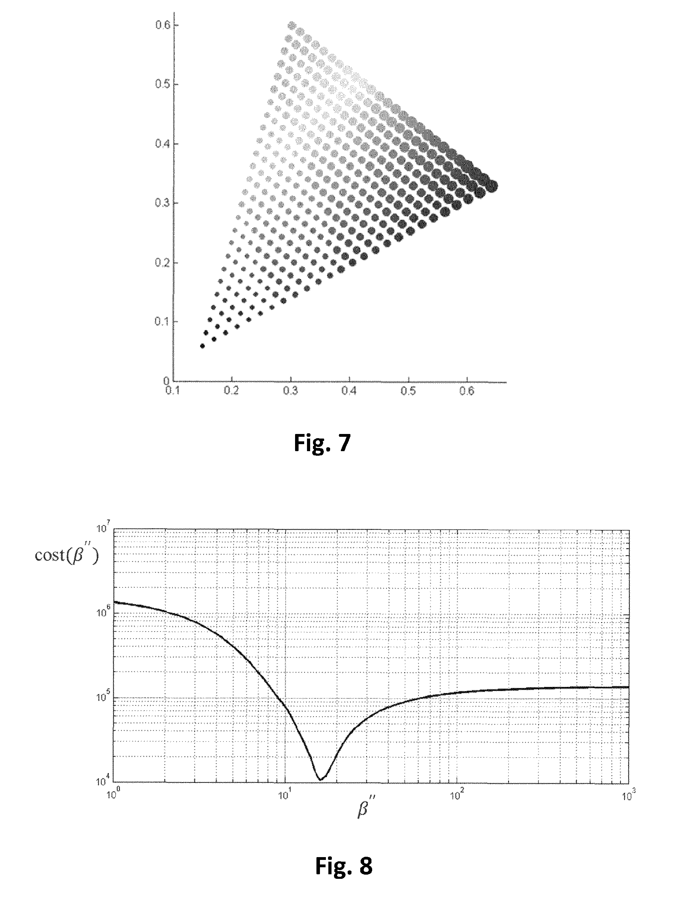

The weights of each mesh are illustrated in Fig. 7 where the radius of each dot is proportional to $J(x, y)$. This emphases the well-known fact that human beings are most sensitive to errors in red (corresponding to the rightmost section of the shown gamut triangle) than to errors in other colors.

Actually, weights as shown have been obtained by using a more elaborated Lab, see Lab 1994 and Lab 2000 formulas, than the one described above, with extra terms dealing with a lower sensitivity to high saturation and to more sensitivity to gray. The integral on the gamut should be understood as the sum on all meshes. This leads to the precise optimization problem

$$\beta''_{\text{opt}}(Ba, L_0) = \text{argmin}_{\beta''} \sum_{(x,y) \in \text{mesh}} J(x, y) d_{ab}\Big(\theta_{Ba, Y_0, a, b}\big(\beta'', (x, y)\big), (x, y)\Big).$$

given that the meshes are of uniform sizes in xy. Now we focus on a formula for $d_{ab}$.

There is a correlation between, on one hand, the lightness L and the non-normalized saturation (or so-called chroma)

$$C_{ab} := \sqrt{a^2 + b^2}$$

in the Lab space (It should be noted that the parameters a and b defining L' from L differ from a, b used to the Lab space) and, on the other hand, the perceived saturation of a color $S_{ab}$. It is somewhat accepted that the perceived saturation follows more or less the ratio below between chroma and luma.

$$S_{ab} = C_{ab}/Y^{1/3}$$

The distance $d_{ab}$ is now constructed such that the perceived saturation $S_{ab}$ is preserved between HDR and SDR. Let us define the Lab mapping

$$\Gamma: \big(x, y, Y_0, Y_f\big) \mapsto (a, b)$$

thanks to the formulas

$$X = Y_0 x/y, \quad Y = Y_0 \quad \text{and} \quad Z = Y_0(1 - x - y)/y$$

$$a = 500(f(X/Y_f) - f(Y/Y_f)) \quad \text{and} \quad b = 200(f(Y/Y_f) - f(Z/Y_f))$$

Preserving the hue means keeping the ratio a vs. b, while also preserving the chroma $C_{ab}$ means keeping a and b. Alternatively, preserving the hue and perceived saturation $S_{ab}$ is simply keeping the two ratios $a/Y^{1/3}$ and $b/Y^{1/3}$.

That is why the following function is considered representative of the perceived saturation, namely the couple $(a/Y_0^{1/3}, b/Y_0^{1/3})$,

$$\Xi_{Y_0} : (x,y) \mapsto \Gamma(x,y,Y_0,Y_0)$$

such that the transform $\theta_{Ba,Y0}(\beta'',*)$ should be invariant under $\Xi_{Y_0}$ as the value $\beta''$ is constructed in order to preserve the perceived saturation. One may simplify the formula $\Xi_{Y_0}$ to get rid of the parameter $Y_0$.

$$\Xi(x,y) = (500(f(x/y) - 1), 200(1 - f((1 - x - y)/y)))$$

Here, the norm $\| \|_2$ is used because the Lab space is uniform Euclidian perceptual space. The index $L_0$ in $\Xi_{L0}$ is understood as the use of the SDR luminance as environmental luminance reference, i.e. $Y_{SDR} = OETF_{BT}^{-1}(L_0)$.
The optimal $\beta''$ preserving the saturation is obtained from the following minimization problem.

$$\beta''_{\text{opt,sat}}(Ba, L_0)$$

$$= \text{argmin}_{\beta''} \sum_{(x,y) \in \text{mesh}} J(x,y) \left\| \Xi \circ \theta_{Ba,Y_0,a,b}(\beta'', (x,y)) - \Xi(x,y) \right\|_2$$

$$=: \text{argmin}_{\beta''} \text{cost}(\beta'')$$

The optimal $\beta''_{\text{opt,sat}}$ is found through a systematic search in a suitable interval. For the example shown in Fig. 8, this search is easy as the plot of the cost function proves it for the parameters Ba=3.9, P=4000, $Y_0$=500 , a=0.4799 and , b=0.4658.
Finally, the value $\beta''_{\text{codec}}$ used in the codec is adjusted from $\beta''_{\text{opt,sat}}$ up to multiplicative constant (close to unity) to obtain a fine adjustment of the perceived saturation between LDR and HDR

$$\beta''_{\text{codec}} \propto \beta''_{\text{opt,sat}}$$

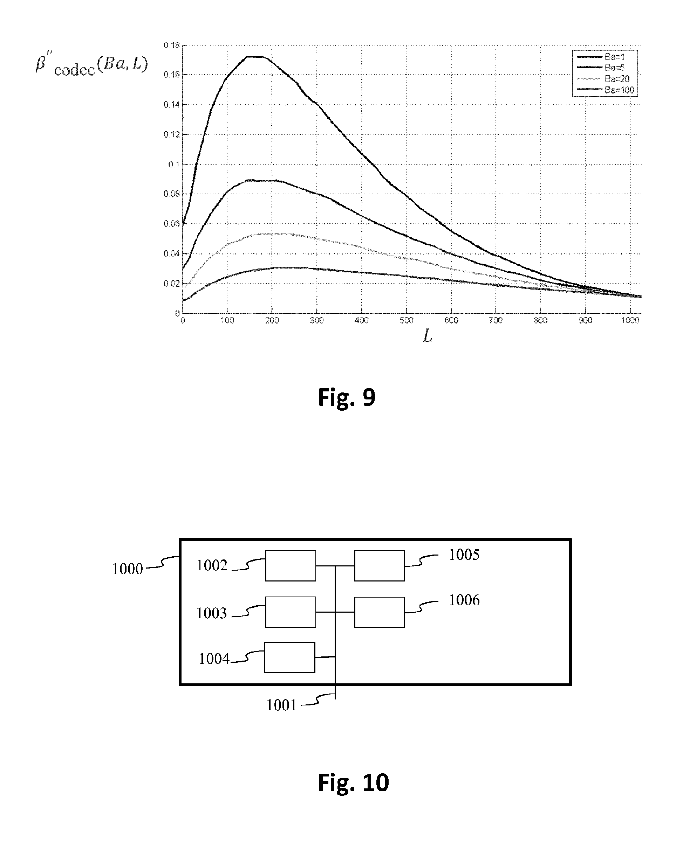

Referring to Fig. 9, the shape of $\beta''_{\text{codec}}$ can be found from the saturation optimization explained above. This is the plot $\beta''_{\text{codec}}(Ba,L)$ on the whole rang L=[0,1024[ for various values of Ba. It is clear that a LUT (look up table) for $\beta''_{\text{codec}}(Ba,*)$ is easily interpolated from hard coded LUT for other values of Ba.
In Figs. 1 to 4, the steps may also be considered as modules or functional units, which may or may not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the disclosure are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.
Fig. 10 represents an exemplary architecture of a device 1000 which may be configured to implement a method described in relation with Fig. 1 to 4.
Device 1000 comprises the following elements that are linked together by a data and address bus 1001:

- a microprocessor 1002 (or CPU), which is, for example, a DSP (or Digital Signal Processor);
- a ROM (or Read Only Memory) 1003;
- a RAM (or Random Access Memory) 1004;
- an I/O interface 1005 for transmission and/or reception of data, from an application; and
- a battery 1006.

According to a variant, the battery 1006 is external to the device. Each of these elements of Fig. 10 are well-known by those skilled in the art and will not be disclosed further. In each of mentioned memory, the word « register » used in the specification can correspond to area of small capacity (some bits) or to very large area (e.g. a whole program or large amount of received or decoded data). ROM 1003 comprises at least a program and parameters. Algorithm of the methods according to the disclosure is stored in the ROM 1003. When switched on, the CPU 1002 uploads the program in the RAM and executes the corresponding instructions.

RAM 1004 comprises, in a register, the program executed by the CPU 602 and uploaded after switch on of the device 1000, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment, the color picture is obtained from a source. For example, the source belongs to a set comprising:

- a local memory (1003 or 1004), e.g. a video memory or a RAM (or Random Access Memory), a flash memory, a ROM (or Read Only Memory), a hard disk ;
- a storage interface, e.g. an interface with a mass storage, a RAM, a flash memory, a ROM, an optical disc or a magnetic support;
- a communication interface (1005), e.g. a wireline interface (for example a bus interface, a wide area network interface, a local area network interface) or a wireless interface (such as a IEEE 802.11 interface or a Bluetooth® interface); and
- a picture capturing circuit (e.g. a sensor such as, for example, a CCD (or Charge-Coupled Device) or CMOS (or Complementary Metal-Oxide-Sem iconductor)).

According to different embodiments, the picture is sent to a destination; specifically, the destination belongs to a set comprising:

- a local memory (1003 or 1004), e.g. a video memory or a RAM (or Random Access Memory), a flash memory, a ROM (or Read Only Memory), a hard disk ;
- a storage interface, e.g. an interface with a mass storage, a RAM, a flash memory, a ROM, an optical disc or a magnetic support;
- a communication interface (1005), e.g. a wireline interface (for example a bus interface, a wide area network interface, a local area network interface) or a wireless interface (such as a IEEE 802.11 interface or a Bluetooth® interface); and
- a display.

According to different embodiments, a bitstream BF and/or F is obtained from a source. Exemplarily, the bitstream is read from a local memory, e.g. a video memory (1004), a RAM (1004), a ROM (1003), a flash memory (1003) or a hard disk (1003). In a variant, the bitstream is received from a storage interface, e.g. an interface with a mass storage, a RAM, a ROM, a flash memory, an optical disc or a magnetic support and/or received from a communication interface (1005), e.g. an interface to a point to point link, a bus, a point to multipoint link or a broadcast network.

According to different embodiments, device 1000 being configured to implement a method described in relation with Figs. 1 to 4, belongs to a set comprising:

- a mobile device ;
- a communication device ;
- a game device ;
- a set top box;
- a TV set;
- a tablet (or tablet computer) ;
- a laptop ;
- a display and
- a decoding chip.

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and any other device for processing a picture or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of matching colors between color pictures of different dynamic range, **characterized in that** it comprises

    - obtaining an input color gamut of an input color picture (301);
    - obtaining an output color gamut of an output color picture (302); and
    - modifying (303) the output color gamut to match the input color gamut,

    wherein
    said modifying (303) comprises minimizing a perceived color error distance between the input color gamut and the output color gamut.

2. The method of claim 1, wherein the perceived color error depends on a hue and a perceived saturation of said color gamuts.

3. The method of claim 1 or claim 2, wherein the output color picture is a dynamic reduced version of the input color picture.

4. The method of any of the preceding claims, wherein the modifying (303) comprises applying a multiplicative factor to chrominance components of the input color picture, the multiplicative factor depending on the minimized perceived color error.

5. The method of claim 4, wherein the multiplicative factor depends on a luminance component of the output color picture.

6. The method of claim 4 or claim 5, wherein the multiplicative factor depends on a backlight value of the input color picture.

7. The method of one of claims 4 to 6, wherein the input color gamut is defined as a finite set of points in an xy plane of a XYZ colorspace.

8. The method of claim 7, wherein perceptual weights are associated to said points such that the perceived color error distance is weighted by the perceptual weight at each point.

9. The method of any of claims 4 to 8, wherein values of said multiplicative factor are provided in a look up table with respect to values of the luminance component of the output color picture.

10. The method of claim 9, wherein for different backlight values of the input color picture dedicated look up tables or a combined look up table are provided.

11. The method of claim 10, wherein a desired multiplicative factor associated with a dedicated backlight value is either read from the look up table or determined by interpolation between corresponding multiplicative factors associated with neighboring backlight values.

12. The method of any of the preceding claims, wherein the perceived color error distance is based on the ab distance in the Lab colorspace.

13. A device for matching colors between color pictures of different dynamic range, **characterized in that** it comprises a processor configured to:

    - obtain an input color gamut of an input color picture;
    - obtain an output color gamut of an output color picture; and
    - modify the output color gamut to match the input color gamut, wherein

    said modifying comprises minimizing a perceived color error distance between the input color gamut and the output color gamut.

14. A computer program product comprising program code instructions to execute the steps of the method according to one of claims 1 to 12 when this program is executed on a computer.

15. A processor readable medium having stored therein instructions for causing a processor to perform at least the steps of the method according to one of claims 1 to 12.

16. Non-transitory storage medium carrying instructions of program code for executing steps of the method according to one of claims 1 to 12, when said program is executed on a computing device.

<u>100</u>

**Fig. 1**

200

**Fig. 2**

300

**Fig. 3**

400

**Fig. 4**

**Fig. 5**

**Fig. 6**

**Fig. 7**

**Fig. 8**

**Fig. 9**

**Fig. 10**

Europäisches
Patentamt

European
Patent Office

Office européen
des brevets

## EUROPEAN SEARCH REPORT

Application Number

EP 15 30 5143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/152597 A1 (SPAULDING KEVIN E [US] ET AL) 14 July 2005 (2005-07-14) | 1-3, 12-16 | INV. H04N1/60 |
| Y | * abstract; figure 1 * <br> * paragraph [0051] - paragraph [0065] * <br> ----- | 4-11 | |
| X | WO 2014/128586 A1 (KONINKL PHILIPS NV [NL]) 28 August 2014 (2014-08-28) | 1-3, 12-16 | |
| Y | * abstract; claims 1,3 * <br> ----- | 4-11 | |
| Y | YUN BYOUNG-JU ET AL: "Color correction for high dynamic range images using a chromatic adaptation method", OPTICAL REVIEW, SPRINGER VERLAG, TOKYO, JP, vol. 20, no. 1, 1 February 2013 (2013-02-01), pages 65-73, XP035320155, ISSN: 1340-6000, DOI: 10.1007/S10043-013-0011-8 [retrieved on 2013-02-01] * the whole document * <br> ----- | 4-11 | |
| | | | TECHNICAL FIELDS SEARCHED (IPC) |
| A | HWI-GANG KIM ET AL: "Separate Color Correction for Tone Compression in HDR Image Rendering", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E96A, no. 8, 1 August 2013 (2013-08-01), pages 1752-1758, XP001585742, ISSN: 0916-8508, DOI: 10.1587/TRANSFUN.E96.A.1752 * the whole document * <br> ----- | 1-16 | H04N G06T |

The present search report has been drawn up for all claims

| Place of search | Date of completion of the search | Examiner |
|---|---|---|
| The Hague | 20 August 2015 | Brans, Tim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5143

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2015

| Patent document cited in search report | Publication date | Patent family member(s) | Publication date |
|---|---|---|---|
| US 2005152597 A1 | 14-07-2005 | NONE | |
| WO 2014128586 A1 | 28-08-2014 | NONE | |

EPO FORM P0459

For more details about this annex : see Official Journal of the European Patent Office, No. 12/82

**REFERENCES CITED IN THE DESCRIPTION**

**Non-patent literature cited in the description**

- *Rec. ITU-R BT.709-5,* April 2002
- *Rec. ITU-R BT.2020-1,* June 2014
- High Efficiency Video Coding. *SERIES H: AUDIOVISUAL AND MULTIMEDIA SYSTEMS, Recommendation ITU-T H.265, Telecommunication Standardization Sector of ITU,* April 2013

- SMPTE standard: High Dynamic Range Electro-Optical Transfer Function of Mastering Reference Displays. *SMPTE ST 2084,* 2014